# EUROPEAN PATENT APPLICATION

(11) **EP 4 654 454 A1**
(43) Date of publication of application: **26.11.2025**
(21) Application number: 24752726.0
(22) Date of filing: 29.01.2024
(51) Int. Cl.: H02M 7/00, H01F 27/40, H01F 27/28, H02M 1/00

(54) **PHOTOVOLTAIC INVERTER AND CONTROL METHOD THEREFOR**

(30) Priority: 06.02.2023 CN 202310145355
(71) Applicant: Huawei Digital Power Technologies Co., Ltd., Shenzhen, Guangdong 518043 (CN)
(72) Inventor: CAI, Yaping, Shenzhen, Guangdong 518043 (CN); WANG, Jun, Shenzhen, Guangdong 518043 (CN); SHI, Lei, Shenzhen, Guangdong 518043 (CN)
(74) Representative: Gill Jennings & Every LLP
(86) International application number: PCT/CN2024/074494
(87) International publication number: WO 2024/164870

(57) **Abstract**

This application provides a photovoltaic inverter and a control method thereof. The photovoltaic inverter includes an inverter circuit, a communication circuit, an arc detection circuit, and a transformer. The transformer includes one magnetic core, at least one primary-side coil, and at least two secondary-side coils. The primary-side coil and the secondary-side coils of the transformer are wound around the magnetic core. One end of a first primary-side coil of the transformer is configured to connect to a power supply, the other end of the first primary-side coil is configured to connect to an input end of the inverter circuit, a first secondary-side coil of the transformer is configured to connect to the communication circuit, and a second secondary-side coil of the transformer is configured to connect to the arc detection circuit, to implement both power line communication and arc detection on the basis that the transformer includes the magnetic core. According to this application, the communication circuit and the arc detection circuit may be disposed in the inverter in a centralized manner, so that disposing space is reduced while power supply safety is ensured, design costs of the photovoltaic inverter are reduced, a structure is simple, the method is simple, and applicability is strong.

## Description

This application claims priority to Chinese Patent Application No. 202310145355.9, filed with the China National Intellectual Property Administration on February 6, 2023 and entitled "PHOTOVOLTAIC INVERTER AND CONTROL METHOD THEREOF", which is incorporated herein by reference in its entirety.

### TECHNICAL FIELD

This application relates to the field of power electronics technologies, and in particular, to a photovoltaic inverter and a control method thereof.

### BACKGROUND

In the field of power electronics technologies, an inverter circuit in a photovoltaic inverter is usually used to convert direct current electric energy into alternating current electric energy, so that the electric energy can be transmitted between a power supply and a load. For example, in the field of photovoltaic power supply, the photovoltaic inverter may convert direct current electric energy output by a direct current power supply (for example, a photovoltaic Photovoltaic, PV panel) into alternating current electric energy, and the alternating current electric energy is provided for and used by a load or a power grid. Usually, the photovoltaic inverter needs to establish a communication connection to the PV panel through a communication circuit, to control an operating current (or voltage) of the photovoltaic inverter or the PV panel based on operating statuses of the PV panel and the load (for example, an impedance of the load and an energy yield of the PV panel), so that the PV panel outputs electric energy to the load at maximum power. During actual application, a large noise signal may be generated between the photovoltaic inverter and the PV panel due to an arc fault. The photovoltaic inverter needs to detect the noise signal based on an arc detection signal. When an arc fault exists in a system, an electrical connection between the photovoltaic inverter and the PV panel is disconnected, to protect power supply safety of the system. In a research and practice process, the inventors of this application find that in the conventional technology, the communication circuit and an arc detection circuit are usually dispersedly disposed, occupy large space, need high design costs, increase power supply costs, and have poor adaptability.

### SUMMARY

This application provides a photovoltaic inverter and a control method thereof. A communication circuit and an arc detection circuit may be disposed in the inverter in a centralized manner, so that disposing space is reduced while power supply safety is ensured, design costs of the photovoltaic inverter are reduced, a structure is simple, the method is simple, and applicability is strong.

According to a first aspect, this application provides a photovoltaic inverter. The photovoltaic inverter may include an inverter circuit, a communication circuit, an arc detection circuit, and a transformer. The transformer may include one magnetic core, at least one primary-side coil, and at least two secondary-side coils. The at least one primary-side coil and the at least two secondary-side coils are wound around the magnetic core. Herein, one end of a first primary-side coil in the at least one primary-side coil of the transformer is configured to connect to a power supply, the other end of the first primary-side coil is configured to connect to an input end of the inverter circuit, a first secondary-side coil in the at least two secondary-side coils of the transformer is configured to connect to the communication circuit, and a second secondary-side coil in the at least two secondary-side coils of the transformer is configured to connect to the arc detection circuit, to implement both power line communication and arc detection on the basis that the transformer includes the magnetic core.

In this application, a photovoltaic panel may be used as the power supply and connected to a load by using the photovoltaic inverter. The photovoltaic inverter may convert direct current electric energy provided by the photovoltaic panel into alternating current energy, and the alternating current energy is provided for the load. Herein, the photovoltaic inverter may include the inverter circuit, and the inverter circuit may convert the direct current electric energy into the alternating current energy, so that electric energy output by the photovoltaic inverter can adapt to the alternating current load. In a photovoltaic power supply scenario, to ensure photovoltaic power supply efficiency, the photovoltaic inverter may supply power by using a maximum power point tracking (Maximum Power Point Tracking, MPPT) technology, that is, control an output current (that is, an input current of the photovoltaic inverter) of the PV panel based on operating statuses of the PV panel and the load (for example, based on parameters such as a light condition and an output voltage of the PV panel, and parameters such as an impedance or power of the load), so that a PV battery operates at a maximum power point. Herein, the photovoltaic inverter may include the communication circuit, and establish a power line communication connection with the PV panel by using the communication circuit, to control an operating current (or voltage) of the photovoltaic inverter or the PV panel based on operating statuses of the PV panel and the load (for example, the impedance of the load and an energy yield of the PV panel), so that the PV panel outputs electric energy to the load at maximum power. In addition, during actual application, a power supply end usually includes a plurality of PV panels. As a result, a voltage of a direct current end of the photovoltaic inverter (that is, an end of the photovoltaic inverter that connects to the power supply) is usually high. When there is any aged cable connection, faulty connector, unmatched model, or loose connection at the direct current end, or two conductors with opposite polarities are close to each other, and insulation between two wires fails, an arc may be generated under a function of a high voltage, and endanger power supply safety. Herein, the photovoltaic inverter may further include the arc detection circuit, and perform arc detection based on a noise signal between the photovoltaic inverter and the power supply. When it is detected that the arc is generated in a system, an electrical connection between the photovoltaic inverter and the power supply is disconnected in time, to ensure the power supply safety.

It may be understood that, on the basis that a communication connection is established between the photovoltaic inverter and the power supply, and the power supply safety of the system is ensured, to reduce designed space of the photovoltaic inverter, improve integration of circuits in the photovoltaic inverter, and reduce design costs, the photovoltaic inverter may connect the communication circuit and the arc detection circuit together by using the transformer, so that the communication circuit and the arc detection circuit reuse the magnetic core in the transformer. The transformer may include the magnetic core, the at least one primary-side coil, and the at least two secondary-side coils. Herein, the primary-side coil (for example, the first primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. Because both the primary-side coil (for example, the first primary-side coil) and the secondary-side coils (for example, the first secondary-side coil and the second secondary-side coil) of the transformer are wound around the magnetic core, the communication circuit and the arc detection circuit may transmit signals (for example, a power line communication signal and the noise signal) through the primary-side coil in the transformer and the respective secondary-side coils of the transformer that are connected to the communication circuit and the arc detection circuit. Herein, a frequency of the power line communication signal is not equal to a frequency of the noise signal, so that mutual interference between the two signals can be avoided. It may be further understood that the communication circuit and the arc detection circuit may respectively change parameters of the respective secondary-side coils connected to the communication circuit and the arc detection circuit (for example, change parameters such as quantities of turns, coil areas, or winding diameters of the first secondary-side coil and the second secondary-side coil), so that the primary-side coil (for example, the first primary-side coil) and the respective secondary-side coils connected to the communication circuit and the arc detection circuit generate resonances at different frequencies, to increase signal strength of the power line communication signal received/sent by the communication circuit and signal strength of the noise signal received by the arc detection circuit. In addition, the communication circuit and the arc detection circuit may respectively perform filtering based on the frequency of the power line communication signal and the frequency of the noise signal, to further improve accuracy of transmitting the power line communication signal or the noise signal, and improve sensitivity of the photovoltaic inverter to detect the arc.

According to this application, the communication circuit and the arc detection circuit may be disposed in the photovoltaic inverter in a centralized manner, so that disposing space is reduced while the power supply safety is ensured, the design costs of the photovoltaic inverter are reduced, a structure is simple, the method is simple, and applicability is strong.

With reference to the first aspect, in a first possible implementation, the one end of the first primary-side coil is configured to connect to a positive output end of the power supply, and the other end of the first primary-side coil is configured to connect to a positive input end of the inverter circuit, so that when an alternating current signal (for example, signals such as the noise signal or the power line communication signal) occurs between the power supply and the inverter circuit, the alternating current signal may be transmitted, through the primary-side coil of the transformer, to the secondary-side coils and the circuits (for example, circuits such as the communication circuit or the arc detection circuit) connected to the secondary-side coils.

With reference to the first aspect or the first possible implementation of the first aspect, in a second possible implementation, the at least one primary-side coil in the transformer may further include a second primary-side coil. The magnetic core may include a magnetic conductive material. One end of the second primary-side coil is configured to connect to the power supply. The other end of the second primary-side coil is configured to connect to the input end of the inverter circuit. The first primary-side coil is coupled to the first secondary-side coil. The second primary-side coil is coupled to the second secondary-side coil. The first primary-side coil and the first secondary-side coil and the second primary-side coil and the second secondary-side coil are respectively disposed at two sides of the magnetic core that are separated by the magnetic conductive material. Herein, the arc detection circuit may further implement arc detection between the power supply and the inverter circuit based on the noise signal that is between the power supply and the inverter circuit and that is received by the second secondary-side coil and the second primary-side coil.

Herein, the primary-side coils (for example, the first primary-side coil and the second primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. In addition, the first primary-side coil may be coupled to the first secondary-side coil, and the second primary-side coil may be coupled to the second secondary-side coil. Because both the primary-side coils (for example, the first primary-side coil and the second primary-side coil) and the secondary-side coils (for example, the first secondary-side coil and the second secondary-side coil) of the transformer are wound around the magnetic core, the communication circuit and the arc detection circuit may transmit signals (for example, the power line communication signal and the noise signal) through the coupled primary-side coils in the transformer and the respective secondary-side coils of the transformer that are connected to the communication circuit and the arc detection circuit. Herein, the frequency of the power line communication signal is not equal to the frequency of the noise signal, so that mutual interference between the two signals can be avoided. It may be further understood that the communication circuit and the arc detection circuit may respectively change the parameters of the respective secondary-side coils connected to the communication circuit and the arc detection circuit (for example, change the parameters such as the quantities of turns, the coil areas, or the winding diameters of the first secondary-side coil and the second secondary-side coil), so that the two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and the signal strength of the noise signal received by the arc detection circuit. In addition, the communication circuit and the arc detection circuit may respectively perform filtering based on the frequency of the power line communication signal and the frequency of the noise signal, to further improve the accuracy of transmitting the power line communication signal or the noise signal. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil and the first secondary-side coil, and the second primary-side coil and the second secondary-side coil) in the transformer may be disposed at two sides of the magnetic core that are separated by the magnetic conductive material. Herein, the magnetic conductive material may be another material with a high magnetic permeability, such as a ferrite, a non-crystal, a nano-crystal, or a powder core, and has a simple structure and good adaptability.

In this application, the secondary-side coils connected to the communication circuit and the arc detection circuit may be respectively coupled to the two primary-side coils in the transformer. This improves system integration and improves system design freedom. For example, parameters of the primary-side coil and the secondary-side coil in each group of coupled coils may be separately changed, so that a resonance frequency of the coil may be more variable, to adapt to frequencies of power line communication signals and noise signals in more application scenarios. In addition, the groups of coupled coils may be separately routed and arranged in the photovoltaic inverter, so that the photovoltaic inverter has higher integration, more design flexibility and freedom, and better adaptability.

With reference to the first aspect or any possible implementation of the first aspect, in a third possible implementation, the photovoltaic inverter may further include an arc self-detection circuit, and the second secondary-side coil is configured to connect the arc self-detection circuit and the arc detection circuit. Herein, the arc self-detection circuit may send an arc self-detection signal based on the second secondary-side coil and the first primary-side coil, to simulate, based on the arc self-detection signal, a noise signal when an arc exists between the power supply and the inverter circuit, where a frequency of the arc self-detection signal is not equal to the frequency of the power line communication signal between the power supply and the inverter circuit. Herein, the arc detection circuit may further receive the arc self-detection signal based on the second secondary-side coil, and simulate arc detection between the power supply and the inverter circuit. Herein, the photovoltaic inverter may further include an arc self-detection circuit. The arc self-detection circuit may generate the arc self-detection signal, to simulate the noise signal generated when the arc exists at the power supply end, to test a detection capability of the arc detection circuit in the photovoltaic inverter. Herein, the arc self-detection circuit may be connected to the secondary-side coil (for example, the second secondary-side coil) of the transformer, and the arc self-detection signal generated by the arc self-detection circuit may be transmitted, through the second secondary-side coil, to a primary-side coil (for example, the first primary-side coil or the second primary-side coil) coupled to the second secondary-side coil. Then, the arc detection circuit is coupled to the primary-side coil (for example, the first primary-side coil or the second primary-side coil) by using the secondary-side coil (for example, the second secondary-side coil) connected to the arc detection circuit, and receives the arc self-detection signal transmitted by the primary-side coil (for example, the first primary-side coil or the second primary-side coil). Herein, the frequency of the power line communication signal is not equal to the frequency of the arc self-detection signal, so that mutual interference between the two signals can be avoided. It may be further understood that the communication circuit and the arc self-detection circuit may respectively change parameters of the respective secondary-side coils connected to the communication circuit and the arc self-detection circuit (for example, change parameters such as quantities of turns, coil areas, or winding diameters of the first secondary-side coil and the second secondary-side coil), so that the two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and signal strength of the arc self-detection signal sent by the arc self-detection circuit and received by the arc detection circuit. In addition, the communication circuit and the arc detection circuit may respectively perform filtering based on the frequency of the power line communication signal and the frequency of the arc self-detection signal, to further improve the accuracy of transmitting the power line communication signal or the arc self-detection signal, and improve the sensitivity of the photovoltaic inverter to detect the arc.

With reference to the third possible implementation of the first aspect, in a fourth possible implementation, when the photovoltaic inverter includes the arc self-detection circuit, the at least two secondary-side coils in the transformer further include a third secondary-side coil. The third secondary-side coil and the at least one primary-side coil are wound around the magnetic core. The third secondary-side coil is coupled to the first primary-side coil, or the third secondary-side coil is coupled to the second primary-side coil. The third secondary-side coil is configured to connect to the arc self-detection circuit. Herein, the arc self-detection circuit may send the arc self-detection signal based on the third secondary-side coil and the first primary-side coil, to simulate, based on the arc self-detection signal, the noise signal when an arc exists between the power supply and the inverter circuit.

Herein, the primary-side coil (for example, the first primary-side coil or the second primary-side coil) of the transformer may be connected between the inverter circuit and the power supply, one secondary-side coil (for example, the first secondary-side coil) may connect to the communication circuit, a 2^{nd} secondary-side coil (for example, the second secondary-side coil) may connect to the arc detection circuit, and a 3^{rd} secondary-side coil (for example, the third secondary-side coil) may connect to the arc self-detection circuit. In addition, the first primary-side coil may be coupled to the first secondary-side coil, and the second primary-side coil may be coupled to the second secondary-side coil and the third secondary-side coil. When the inverter includes only one primary-side coil, the first primary-side coil may be coupled to the first secondary-side coil, the second secondary-side coil, and the third secondary-side coil. Because both the primary-side coils (for example, the first primary-side coil and the second primary-side coil) and the secondary-side coils (for example, the first secondary-side coil, the second secondary-side coil, and the third secondary-side coil) of the transformer are wound around the magnetic core, the communication circuit, the arc detection circuit, and the arc self-detection circuit may transmit signals (for example, the power line communication signal, the noise signal, and the arc self-detection signal) through the coupled primary-side coils in the transformer and the respective secondary-side coils of the transformer that are connected to the communication circuit, the arc detection circuit, and the arc self-detection circuit. Herein, the frequency of the power line communication signal is not equal to the frequency of the noise signal, and the frequency of the power line communication signal is not equal to the frequency of the arc self-detection signal, so that mutual interference can be avoided when two signals are simultaneously transmitted in the photovoltaic inverter. It may be further understood that the communication circuit, the arc detection circuit, and the arc self-detection circuit may respectively change parameters of the respective secondary-side coils (and the primary-side coils coupled to the secondary-side coils) connected to the communication circuit, the arc detection circuit, and the arc self-detection circuit (for example, change the parameters such as quantities of turns, coil areas, or winding diameters of the first secondary-side coil, the second secondary-side coil, and the third secondary-side coil), so that the groups of coupled coils (for example, the first primary-side coil and the first secondary-side coil, and the second primary-side coil, the second secondary-side coil, and the third secondary-side coil; or the first primary-side coil, the first secondary-side coil, the second secondary-side coil, and the third secondary-side coil) respectively generate resonances at different frequencies, to increase the signal strength of the power line communication signal received/sent by the communication circuit, the signal strength of the noise signal received by the arc detection circuit, or the signal strength of the arc self-detection signal received by the arc detection circuit. In addition, the communication circuit and the arc detection circuit may respectively perform filtering based on the frequency of the power line communication signal, the frequency of the noise signal, or the frequency of the arc self-detection signal, to further improve accuracy of transmitting the power line communication signal, the noise signal, or the arc self-detection signal, and improve the sensitivity of the photovoltaic inverter to detect the arc. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil and the first secondary-side coil, and the second primary-side coil, the second secondary-side coil, and the third secondary-side coil) in the transformer may be disposed at two sides of the magnetic core that are separated by the magnetic conductive material. Herein, the magnetic conductive material may be another material with a high magnetic permeability, such as the ferrite, the non-crystal, the nano-crystal, or the powder core, and has the simple structure and the good adaptability.

With reference to the fourth possible implementation of the first aspect, in a fifth possible implementation, both the first primary-side coil and the second primary-side coil have coils wound in opposite directions to suppress a common-mode component in the noise signal. Herein, parameters of the coils wound in opposite directions (for example, quantities of turns, coil areas, and winding diameters) may be consistent or may be different, provided that when the noise signal (or the arc self-detection signal) passes through, magnetic fluxes generated by the common-mode component of the noise signal (or the arc self-detection signal) in the positive and negative coils are equal, so that arc detection precision of the system can be further improved. The method is flexible, easy to operate, and has good adaptability.

With reference to the first aspect or any possible implementation of the first aspect, in a sixth possible implementation, the arc detection circuit may be further configured to: when an amplitude of the noise signal is greater than or equal to a first noise threshold, detect that an arc exists between the power supply and the inverter circuit. Herein, the arc detection circuit may be further configured to: when the amplitude of the noise signal is less than a second noise threshold, detect that no arc exists between the power supply and the inverter circuit, where the second noise threshold is less than or equal to the first noise threshold. It may be understood that a value of the first noise threshold (and/or the second noise threshold) herein may be determined based on an amplitude of the noise signal when the arc occurs in the system, or may be determined based on a first noise threshold (and/or a second noise threshold) obtained, collected, received, detected, stored, or otherwise obtained by the photovoltaic inverter. For example, the photovoltaic inverter or an external central control system may calculate, in an operating process (or a design process) of the photovoltaic inverter, an amplitude of a noise signal generated when a photovoltaic system operates normally (no arc is generated) within a noise signal amplitude range, so that the arc detection circuit may obtain the first noise threshold (and/or the second noise threshold) based on a relationship curve. This may be specifically set based on an application scenario. It may be understood that the first noise threshold (and/or the second noise threshold) herein may be a voltage value (a current value, or a power value), may be a plurality of discrete voltage values (current values, or power values), or may be a voltage range (a current range, or a power range) including a plurality of discrete voltage values (current values, or power values) or consecutive voltage values (current values, or power values). In addition, the second noise threshold herein may be less than or equal to the first noise threshold. When the second noise threshold is less than the first noise threshold, the arc detection circuit may be prevented from mistakenly determining, after determining that an arc is generated, that the arc in the system has disappeared (or no arc exists) when the amplitude of the noise signal is occasionally less than the first noise threshold but is not stably less than the first noise threshold. In this way, the arc detection circuit can avoid frequently disconnecting and connecting the connection between the photovoltaic inverter and the power supply, or avoid that the connection between the photovoltaic inverter and the power supply fails to be disconnected in time due to mistaken determining when the arc is generated, thereby further improving the power supply safety of the system.

With reference to the sixth possible implementation of the first aspect, in a seventh possible implementation, the arc detection circuit may be further configured to: perform sampling on the noise signal at least once, and obtain the amplitude of the noise signal based on a result of the sampling on the noise signal at least once. Herein, the arc detection circuit may sample a received noise signal at a same sampling point (or a plurality of different sampling points) within a consecutive period of time (or at a plurality of time points at specific time intervals), and directly (or through averaging or weighted averaging) calculate a result obtained through sampling to obtain an amplitude of the noise signal, or perform calculations such as discrete Fourier transform or wavelet transform on a sampling result to obtain an amplitude of the noise signal, thereby further improving the arc detection precision and accuracy of the system.

According to a second aspect, this application provides a photovoltaic inverter control method. This control method is applicable to a photovoltaic inverter. The photovoltaic inverter may include an inverter circuit, a communication circuit, an arc detection circuit, and a transformer. The transformer may include one magnetic core, at least one primary-side coil, and at least two secondary-side coils. The at least one primary-side coil and the at least two secondary-side coils are wound around the magnetic core. One end of a first primary-side coil in the at least one primary-side coil of the transformer is configured to connect to a power supply, the other end of the first primary-side coil is configured to connect to an input end of the inverter circuit, a first secondary-side coil in the at least two secondary-side coils of the transformer is configured to connect to the communication circuit, and a second secondary-side coil in the at least two secondary-side coils of the transformer is configured to connect to the arc detection circuit, to implement both power line communication and arc detection on the basis that the transformer includes the magnetic core. The method may include:
implementing a power line communication connection between the photovoltaic inverter and an external central control system based on a power line communication signal of the external central control system received/sent by the first secondary-side coil and the first primary-side coil; and implementing arc detection between the power supply and the inverter circuit based on a noise signal that is between the power supply and the inverter circuit and that is received by the second secondary-side coil and the first primary-side coil, where a frequency of the noise signal is not equal to a frequency of the power line communication signal.

In this application, a photovoltaic panel may be used as the power supply and connected to a load by using the photovoltaic inverter. The photovoltaic inverter may convert direct current electric energy provided by the photovoltaic panel into alternating current energy, and the alternating current energy is provided for the load. Herein, the photovoltaic inverter may include the inverter circuit, and the inverter circuit may convert the direct current electric energy into the alternating current energy, so that electric energy output by the photovoltaic inverter can adapt to the alternating current load. In a photovoltaic power supply scenario, to ensure photovoltaic power supply efficiency, the photovoltaic inverter may supply power by using an MPPT technology, that is, control an output current (that is, an input current of the photovoltaic inverter) of the PV panel based on operating statuses of the PV panel and the load (for example, based on parameters such as a light condition and an output voltage of the PV panel, and parameters such as an impedance or power of the load), so that a PV battery operates at a maximum power point. Herein, the photovoltaic inverter may include the communication circuit, and establish a power line communication connection with the PV panel by using the communication circuit, to control an operating current (or voltage) of the photovoltaic inverter or the PV panel based on operating statuses of the PV panel and the load (for example, the impedance of the load and an energy yield of the PV panel), so that the PV panel outputs electric energy to the load at maximum power. In addition, during actual application, a power supply end usually includes a plurality of PV panels. As a result, a voltage of a direct current end of the photovoltaic inverter (that is, an end of the photovoltaic inverter that connects to the power supply) is usually high. When there is any aged cable connection, faulty connector, unmatched model, or loose connection at the direct current end, or two conductors with opposite polarities are close to each other, and insulation between two wires fails, an arc may be generated under a function of a high voltage, and endanger power supply safety. Herein, the photovoltaic inverter may further include the arc detection circuit, and perform arc detection based on a noise signal between the photovoltaic inverter and the power supply. When it is detected that the arc is generated in a system, an electrical connection between the photovoltaic inverter and the power supply is disconnected in time, to ensure the power supply safety.

It may be understood that, on the basis that a communication connection is established between the photovoltaic inverter and the power supply, and the power supply safety of the system is ensured, to reduce designed space of the photovoltaic inverter, improve integration of circuits in the photovoltaic inverter, and reduce design costs, the photovoltaic inverter may connect the communication circuit and the arc detection circuit together by using the transformer, so that the communication circuit and the arc detection circuit reuse the magnetic core in the transformer. The transformer may include the magnetic core, the at least one primary-side coil, and the at least two secondary-side coils. Herein, the primary-side coil (for example, the first primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. Because both the primary-side coil (for example, the first primary-side coil) and the secondary-side coils (for example, the first secondary-side coil and the second secondary-side coil) of the transformer are wound around the magnetic core, the communication circuit and the arc detection circuit may transmit signals (for example, the power line communication signal and the noise signal) through the primary-side coil in the transformer and the respective secondary-side coils of the transformer that are connected to the communication circuit and the arc detection circuit. Herein, the frequency of the power line communication signal is not equal to the frequency of the noise signal, so that mutual interference between the two signals can be avoided. It may be further understood that the communication circuit and the arc detection circuit may respectively change parameters of the respective secondary-side coils connected to the communication circuit and the arc detection circuit (for example, change parameters such as quantities of turns, coil areas, or winding diameters of the first secondary-side coil and the second secondary-side coil), so that the primary-side coil (for example, the first primary-side coil) and the respective secondary-side coils connected to the communication circuit and the arc detection circuit generate resonances at different frequencies, to increase signal strength of the power line communication signal received/sent by the communication circuit and signal strength of the noise signal received by the arc detection circuit. In addition, the communication circuit and the arc detection circuit may respectively perform filtering based on the frequency of the power line communication signal and the frequency of the noise signal, to further improve accuracy of transmitting the power line communication signal or the noise signal, and improve sensitivity of the photovoltaic inverter to detect the arc.

According to this application, the communication circuit and the arc detection circuit may be disposed in the photovoltaic inverter in a centralized manner, so that disposing space is reduced while the power supply safety is ensured, the design costs of the photovoltaic inverter are reduced, a structure is simple, the method is simple, and applicability is strong.

With reference to the second aspect, in a first possible implementation, the at least one primary-side coil in the transformer may further include a second primary-side coil. The magnetic core may include a magnetic conductive material. One end of the second primary-side coil is configured to connect to the power supply. The other end of the second primary-side coil is configured to connect to the input end of the inverter circuit. The first primary-side coil is coupled to the first secondary-side coil. The second primary-side coil is coupled to the second secondary-side coil. The first primary-side coil and the first secondary-side coil and the second primary-side coil and the second secondary-side coil are respectively disposed at two sides of the magnetic core that are separated by the magnetic conductive material. The method may further include: implementing arc detection between the power supply and the inverter circuit based on the noise signal that is between the power supply and the inverter circuit and that is received by the second secondary-side coil and the second primary-side coil.

Herein, the primary-side coils (for example, the first primary-side coil and the second primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. In addition, the first primary-side coil may be coupled to the first secondary-side coil, and the second primary-side coil may be coupled to the second secondary-side coil. Because both the primary-side coils (for example, the first primary-side coil and the second primary-side coil) and the secondary-side coils (for example, the first secondary-side coil and the second secondary-side coil) of the transformer are wound around the magnetic core, the communication circuit and the arc detection circuit may transmit signals (for example, the power line communication signal and the noise signal) through the coupled primary-side coils in the transformer and the respective secondary-side coils of the transformer that are connected to the communication circuit and the arc detection circuit. Herein, the frequency of the power line communication signal is not equal to the frequency of the noise signal, so that mutual interference between the two signals can be avoided. It may be further understood that the communication circuit and the arc detection circuit may respectively change the parameters of the respective secondary-side coils connected to the communication circuit and the arc detection circuit (for example, change the parameters such as the quantities of turns, the coil areas, or the winding diameters of the first secondary-side coil and the second secondary-side coil), so that the two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and the signal strength of the noise signal received by the arc detection circuit. In addition, the communication circuit and the arc detection circuit may respectively perform filtering based on the frequency of the power line communication signal and the frequency of the noise signal, to further improve the accuracy of transmitting the power line communication signal or the noise signal. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil and the first secondary-side coil, and the second primary-side coil and the second secondary-side coil) in the transformer may be disposed at two sides of the magnetic core that are separated by the magnetic conductive material. Herein, the magnetic conductive material may be another material with a high magnetic permeability, such as a ferrite, a non-crystal, a nano-crystal, or a powder core, and has a simple structure and good adaptability.

In this application, the secondary-side coils connected to the communication circuit and the arc detection circuit may be respectively coupled to the two primary-side coils in the transformer. This improves system integration and improves system design freedom. For example, parameters of the primary-side coil and the secondary-side coil in each group of coupled coils may be separately changed, so that a resonance frequency of the coil may be more variable, to adapt to frequencies of power line communication signals and noise signals in more application scenarios. In addition, the groups of coupled coils may be separately routed and arranged in the photovoltaic inverter, so that the photovoltaic inverter has higher integration, more design flexibility and freedom, and better adaptability.

With reference to the second aspect or the first possible implementation of the second aspect, in a second possible implementation, the photovoltaic inverter may further include an arc self-detection circuit, and the second secondary-side coil is configured to connect the arc self-detection circuit and the arc detection circuit. The method may further include:
sending an arc self-detection signal based on the second secondary-side coil and the first primary-side coil, to simulate, based on the arc self-detection signal, a noise signal when an arc exists between the power supply and the inverter circuit, where a frequency of the arc self-detection signal is not equal to the frequency of the power line communication signal between the power supply and the inverter circuit; and receiving the arc self-detection signal based on the second secondary-side coil, and simulating arc detection between the power supply and the inverter circuit.

Herein, the photovoltaic inverter may further include an arc self-detection circuit. The arc self-detection circuit may generate the arc self-detection signal, to simulate the noise signal generated when the arc exists at the power supply end, to test a detection capability of the arc detection circuit in the photovoltaic inverter. Herein, the arc self-detection circuit may be connected to the secondary-side coil (for example, the second secondary-side coil) of the transformer, and the arc self-detection signal generated by the arc self-detection circuit may be transmitted, through the second secondary-side coil, to a primary-side coil (for example, the first primary-side coil or the second primary-side coil) coupled to the second secondary-side coil. Then, the arc detection circuit is coupled to the primary-side coil (for example, the first primary-side coil or the second primary-side coil) by using the secondary-side coil (for example, the second secondary-side coil) connected to the arc detection circuit, and receives the arc self-detection signal transmitted by the primary-side coil (for example, the first primary-side coil or the second primary-side coil). Herein, the frequency of the power line communication signal is not equal to the frequency of the arc self-detection signal, so that mutual interference between the two signals can be avoided. It may be further understood that the communication circuit and the arc self-detection circuit may respectively change parameters of the respective secondary-side coils connected to the communication circuit and the arc self-detection circuit (for example, change parameters such as quantities of turns, coil areas, or winding diameters of the first secondary-side coil and the second secondary-side coil), so that the two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and signal strength of the arc self-detection signal sent by the arc self-detection circuit and received by the arc detection circuit. In addition, the communication circuit and the arc detection circuit may respectively perform filtering based on the frequency of the power line communication signal and the frequency of the arc self-detection signal, to further improve the accuracy of transmitting the power line communication signal or the arc self-detection signal, and improve the sensitivity of the photovoltaic inverter to detect the arc.

With reference to the second possible implementation of the second aspect, in a third possible implementation, when the photovoltaic inverter includes the arc self-detection circuit, the at least two secondary-side coils in the transformer further include a third secondary-side coil. The third secondary-side coil and the at least one primary-side coil are wound around the magnetic core. The third secondary-side coil is coupled to the first primary-side coil, or the third secondary-side coil is coupled to the second primary-side coil. The third secondary-side coil is configured to connect to the arc self-detection circuit. Before the receiving the arc self-detection signal based on the second secondary-side coil, the method may further include:
sending the arc self-detection signal based on the third secondary-side coil and the first primary-side coil, to simulate, based on the arc self-detection signal, the noise signal when an arc exists between the power supply and the inverter circuit.

Herein, the primary-side coil (for example, the first primary-side coil or the second primary-side coil) of the transformer may be connected between the inverter circuit and the power supply, one secondary-side coil (for example, the first secondary-side coil) may connect to the communication circuit, a 2^{nd} secondary-side coil (for example, the second secondary-side coil) may connect to the arc detection circuit, and a 3^{rd} secondary-side coil (for example, the third secondary-side coil) may connect to the arc self-detection circuit. In addition, the first primary-side coil may be coupled to the first secondary-side coil, and the second primary-side coil may be coupled to the second secondary-side coil and the third secondary-side coil. When the inverter includes only one primary-side coil, the first primary-side coil may be coupled to the first secondary-side coil, the second secondary-side coil, and the third secondary-side coil. Because both the primary-side coils (for example, the first primary-side coil and the second primary-side coil) and the secondary-side coils (for example, the first secondary-side coil, the second secondary-side coil, and the third secondary-side coil) of the transformer are wound around the magnetic core, the communication circuit, the arc detection circuit, and the arc self-detection circuit may transmit signals (for example, the power line communication signal, the noise signal, and the arc self-detection signal) through the coupled primary-side coils in the transformer and the respective secondary-side coils of the transformer that are connected to the communication circuit, the arc detection circuit, and the arc self-detection circuit. Herein, the frequency of the power line communication signal is not equal to the frequency of the noise signal, and the frequency of the power line communication signal is not equal to the frequency of the arc self-detection signal, so that mutual interference can be avoided when two signals are simultaneously transmitted in the photovoltaic inverter. It may be further understood that the communication circuit, the arc detection circuit, and the arc self-detection circuit may respectively change parameters of the respective secondary-side coils (and the primary-side coils coupled to the secondary-side coils) connected to the communication circuit, the arc detection circuit, and the arc self-detection circuit (for example, change the parameters such as quantities of turns, coil areas, or winding diameters of the first secondary-side coil, the second secondary-side coil, and the third secondary-side coil), so that the groups of coupled coils (for example, the first primary-side coil and the first secondary-side coil, and the second primary-side coil, the second secondary-side coil, and the third secondary-side coil; or the first primary-side coil, the first secondary-side coil, the second secondary-side coil, and the third secondary-side coil) respectively generate resonances at different frequencies, to increase the signal strength of the power line communication signal received/sent by the communication circuit, the signal strength of the noise signal received by the arc detection circuit, or the signal strength of the arc self-detection signal received by the arc detection circuit. In addition, the communication circuit and the arc detection circuit may respectively perform filtering based on the frequency of the power line communication signal, the frequency of the noise signal, or the frequency of the arc self-detection signal, to further improve accuracy of transmitting the power line communication signal, the noise signal, or the arc self-detection signal, and improve the sensitivity of the photovoltaic inverter to detect the arc. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil and the first secondary-side coil, and the second primary-side coil, the second secondary-side coil, and the third secondary-side coil) in the transformer may be disposed at two sides of the magnetic core that are separated by the magnetic conductive material. Herein, the magnetic conductive material may be another material with a high magnetic permeability, such as the ferrite, the non-crystal, the nano-crystal, or the powder core, and has the simple structure and the good adaptability.

With reference to any one of the second aspect or the possible implementations of the second aspect, in a fourth possible implementation, the implementing arc detection between the power supply and the inverter circuit based on a noise signal that is between the power supply and the inverter circuit and that is received by the second secondary-side coil and the first primary-side coil may include:
when an amplitude of the noise signal is greater than or equal to a first noise threshold, detecting that an arc exists between the power supply and the inverter circuit; and when the amplitude of the noise signal is less than a second noise threshold, detecting that no arc exists between the power supply and the inverter circuit, where the second noise threshold is less than or equal to the first noise threshold.

It may be understood that a value of the first noise threshold (and/or the second noise threshold) herein may be determined based on an amplitude of the noise signal when the arc occurs in the system, or may be determined based on a first noise threshold (and/or a second noise threshold) obtained, collected, received, detected, stored, or otherwise obtained by the photovoltaic inverter. For example, the photovoltaic inverter or an external central control system may calculate, in an operating process (or a design process) of the photovoltaic inverter, an amplitude of a noise signal generated when a photovoltaic system operates normally (no arc is generated) within a noise signal amplitude range, so that the arc detection circuit may obtain the first noise threshold (and/or the second noise threshold) based on a relationship curve. This may be specifically set based on an application scenario. It may be understood that the first noise threshold (and/or the second noise threshold) herein may be a voltage value (a current value, or a power value), may be a plurality of discrete voltage values (current values, or power values), or may be a voltage range (a current range, or a power range) including a plurality of discrete voltage values (current values, or power values) or consecutive voltage values (current values, or power values). In addition, the second noise threshold herein may be less than or equal to the first noise threshold. When the second noise threshold is less than the first noise threshold, the arc detection circuit may be prevented from mistakenly determining, after determining that an arc is generated, that the arc in the system has disappeared (or no arc exists) when the amplitude of the noise signal is occasionally less than the first noise threshold but is not stably less than the first noise threshold. In this way, the arc detection circuit can avoid frequently disconnecting and connecting the connection between the photovoltaic inverter and the power supply, or avoid that the connection between the photovoltaic inverter and the power supply fails to be disconnected in time due to mistaken determining when the arc is generated, thereby further improving the power supply safety of the system.

With reference to the fourth possible implementation of the second aspect, in a fifth possible implementation, the implementing arc detection between the power supply and the inverter circuit based on a noise signal that is between the power supply and the inverter circuit and that is received by the second secondary-side coil and the first primary-side coil may further include:
performing sampling on the noise signal at least once, and obtaining the amplitude of the noise signal based on a result of the sampling on the noise signal at least once.

Herein, the arc detection circuit may sample a received noise signal at a same sampling point (or a plurality of different sampling points) within a consecutive period of time (or at a plurality of time points at specific time intervals), and directly (or through averaging or weighted averaging) calculate a result obtained through sampling to obtain an amplitude of the noise signal, or perform calculations such as discrete Fourier transform or wavelet transform on a sampling result to obtain an amplitude of the noise signal, thereby further improving the arc detection precision and accuracy of the system.

### BRIEF DESCRIPTION OF DRAWINGS

FIG. 1 is a schematic of an application scenario of a photovoltaic inverter according to an embodiment of this application;
FIG. 2 is a diagram of a structure of a transformer according to an embodiment of this application;
FIG. 3 is a schematic of a structure of a photovoltaic inverter according to an embodiment of this application;
FIG. 4 is a diagram of another structure of a transformer according to an embodiment of this application;
FIG. 5 is a schematic of another structure of a photovoltaic inverter according to an embodiment of this application;
FIG. 6 is a diagram of another structure of a transformer according to an embodiment of this application;
FIG. 7 is a schematic of another structure of a photovoltaic inverter according to an embodiment of this application;
FIG. 8 is a diagram of another structure of a transformer according to an embodiment of this application; and
FIG. 9 is a schematic flowchart of a control method according to an embodiment of this application.

### DESCRIPTION OF EMBODIMENTS

A photovoltaic inverter provided in this application is applicable to a plurality of application fields such as the field of power generation using renewable energy, the field of peak shaving and frequency modulation in conventional power generation, the field of supplying power to an important device, and the new energy vehicle field. This may be specifically determined based on an actual application scenario, and is not limited herein. The photovoltaic inverter provided in this application is applicable to different power supply systems such as an energy storage system, an uninterruptible power supply system, and a motor drive system. This may be specifically determined based on an actual application scenario, and is not limited herein. The photovoltaic inverter provided in this application is applicable to different application scenarios, for example, an application scenario in which an inverter circuit in a photovoltaic power supply environment is controlled, an application scenario in which an inverter circuit in a photovoltaic energy storage-only power supply environment is controlled, or another application scenario. The following describes an example of an application scenario in which an inverter circuit in a photovoltaic power supply environment is controlled. Details are not described below again.

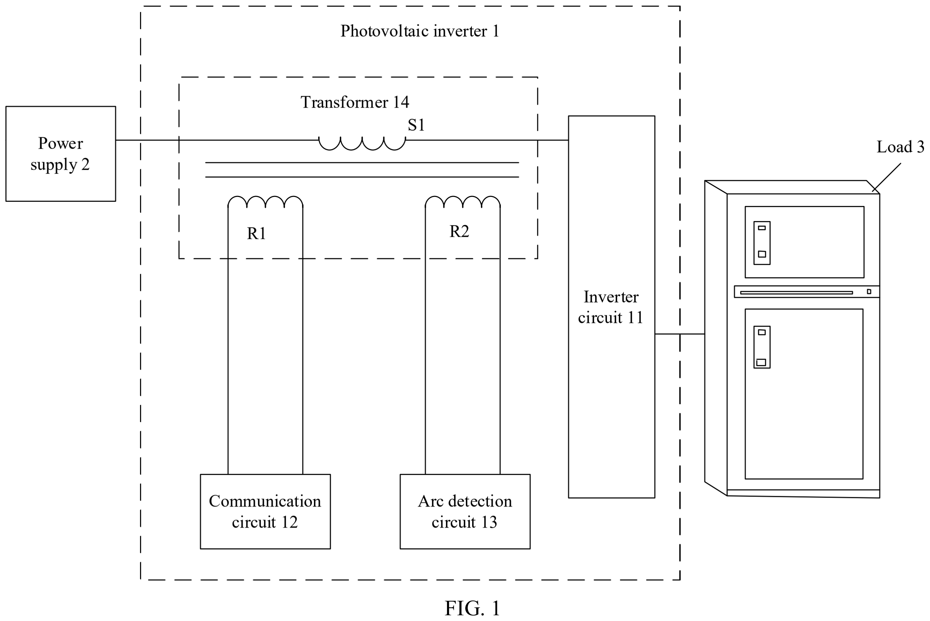

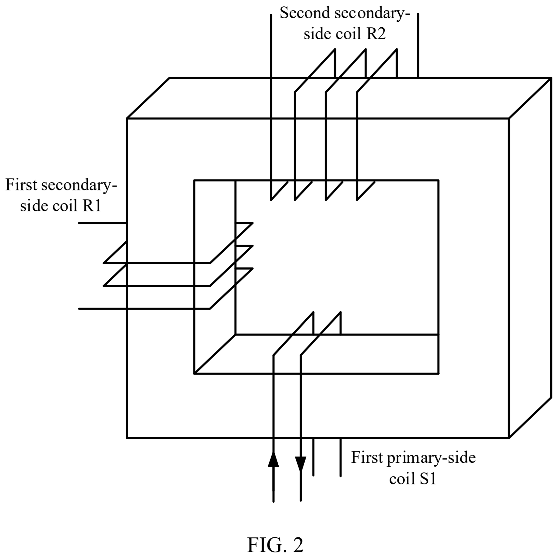

Refer to FIG. 1. FIG. 1 is a schematic of an application scenario of a photovoltaic inverter according to an embodiment of this application. In a power supply system powered by only energy storage, as shown in FIG. 1, the power supply system includes a photovoltaic inverter 1, a power supply 2, and a load 3. The photovoltaic inverter 1 includes an inverter circuit 11. The power supply 2 may be connected to the load 3 through the inverter circuit 11. In some feasible implementations, the power supply 2 may supply power to the load 3 through the inverter circuit 11. It may be understood that the power supply 2 provided in this application is applicable to application scenarios in which power is supplied to a plurality of types of power-consuming devices, for example, power is supplied to base station equipment in a remote area with no mains or poor mains, or power is supplied to household devices (such as a refrigerator or an air conditioner). This may be specifically determined based on an actual application scenario, and is not limited herein. Further, it may be understood that the load 3 in FIG. 2 may include a power grid. Herein, the power grid may include a power-consuming device or a power transmission device, for example, a transmission line, a power transfer station, a communication base station, or a household device. Herein, the load 3 may further include a load (a power-consuming apparatus or a power transmission apparatus) in which a voltage and a current are in a non-linear relationship when a motor or a rectifier device is running (supplying power or consuming electricity). In some feasible implementations, the photovoltaic inverter may include the inverter circuit 11, and the inverter circuit 11 may convert a direct current electric energy into an alternating current electric energy, so that electric energy output by the photovoltaic inverter can adapt to the alternating current load. In a photovoltaic power supply scenario, to ensure photovoltaic power supply efficiency, the photovoltaic inverter may supply power by using a maximum power point tracking (Maximum Power Point Tracking, MPPT) technology, to be specific, control an output current (namely, an input current of the photovoltaic inverter) of a PV panel based on operating statuses of the PV panel and the load (for example, based on parameters such as a light condition and an output voltage of the PV panel, and parameters such as an impedance or power of the load), so that a PV battery operates at a maximum power point. Herein, the photovoltaic inverter may include a communication circuit 12, and establish a power line communication connection with the PV panel through the communication circuit 12, to control an operating current (or voltage) of the photovoltaic inverter or the PV panel based on operating statuses of the PV panel and the load (for example, the impedance of the load and an energy yield of the PV panel), so that the PV panel outputs electric energy to the load at maximum power. In addition, during actual application, a power supply end usually includes a plurality of PV panels. As a result, a voltage of a direct current end of the photovoltaic inverter (namely, an end of the photovoltaic inverter that connects to the power supply) is usually high. When there is any aged cable connection, faulty connector, unmatched model, or loose connection at the direct current end, or two conductors with opposite polarities are close to each other, and insulation between two wires fails, an arc may be generated under a function of a high voltage, and endanger power supply safety. Herein, the photovoltaic inverter may further include an arc detection circuit 13, and perform arc detection based on a noise signal between the photovoltaic inverter and the power supply. When it is detected that the arc is generated in a system, an electrical connection between the photovoltaic inverter and the power supply is disconnected in time, to ensure the power supply safety.

It may be understood that, on the basis that a communication connection is established between the photovoltaic inverter and the power supply, and the power supply safety of the system is ensured, to reduce designed space of the photovoltaic inverter, improve integration of circuits in the photovoltaic inverter, and reduce design costs, the photovoltaic inverter may connect the communication circuit 12 and the arc detection circuit 13 together by using a transformer 14, so that the communication circuit 12 and the arc detection circuit 13 reuse a magnetic core in the transformer 14. For specific details, refer to FIG. 2. FIG. 2 is a diagram of a structure of a transformer according to an embodiment of this application. As shown in FIG. 2, the transformer 14 may include one magnetic core, at least one primary-side coil, and at least two secondary-side coils. Herein, one end of the at least one primary-side coil (for example, a first primary-side coil S1) of the transformer 14 may be configured to connect to a power supply, the other end of the at least one primary-side coil (for example, the first primary-side coil S1) may be configured to connect to an input end of an inverter circuit 11, one secondary-side coil (for example, a first secondary-side coil R1) of the at least two secondary-side coils of the transformer may be configured to connect to a communication circuit 12, and another secondary-side coil (for example, a second secondary-side coil R2) of the at least two secondary-side coils of the transformer 14 may be configured to connect to an arc detection circuit 13, to implement both power line communication and arc detection on the basis that the transformer 14 includes the magnetic core.

In some feasible implementations, one end of the at least one primary-side coil (for example, the first primary-side coil S1) of the transformer 14 may be configured to connect to a positive output end of the power supply, and the other end of the at least one primary-side coil (for example, the first primary-side coil S1) of the transformer 14 is configured to connect to a positive input end of the inverter circuit 11, so that when an alternating current signal (for example, the noise signal or the power line communication signal) occurs between the power supply and the inverter circuit 11, the alternating current signal may be transmitted, through the primary-side coil of the transformer 14, to the secondary-side coil and the circuit (for example, the communication circuit 12 or the arc detection circuit 13) connected to the secondary-side coils.

Herein, the first primary-side coil S1 may have coils wound in opposite directions to suppress a common-mode component in the noise signal. Herein, parameters of the coils wound in opposite directions (for example, quantities of turns, coil areas, and winding diameters) may be consistent or may be different, provided that when the noise signal (or the arc self-detection signal) passes through, magnetic fluxes generated by the common-mode component of the noise signal (or the arc self-detection signal) in the positive and negative coils are equal, so that arc detection precision of the system can be further improved. The method is flexible, easy to operate, and has good adaptability. It may be understood that a winding manner and a winding location of the coils on the magnetic core shown in FIG. 2 are merely examples for description. Another winding manner and the winding location are also applicable to this application, and may be specifically determined based on an application scenario. This is not limited herein. A winding manner and a winding location of coils on a magnetic core in the following schematic diagram of a structure of a transformer are also examples for description. Details are not described herein again.

Herein, because both the primary-side coil (for example, the first primary-side coil S1) and the secondary-side coils (for example, the first secondary-side coil R1 and the second secondary-side coil R2) of the transformer 14 are wound around the magnetic core, the communication circuit 12 and the arc detection circuit 13 may transmit signals (for example, the power line communication signal and the noise signal) through the primary-side coil in the transformer 14 and the respective secondary-side coils of the transformer 14 that are connected to the communication circuit 12 and the arc detection circuit 13. Herein, a frequency of the power line communication signal is not equal to a frequency of the noise signal, so that mutual interference between the two signals can be avoided. It may be further understood that the communication circuit 12 and the arc detection circuit 13 may respectively change parameters of the respective secondary-side coils connected to the communication circuit 12 and the arc detection circuit 13 (for example, change parameters such as quantities of turns, coil areas, or winding diameters of the first secondary-side coil R1 and the second secondary-side coil R2), so that the primary-side coil (for example, the first primary-side coil S1) and the respective secondary-side coils connected to the communication circuit 12 and the arc detection circuit 13 generate resonances at different frequencies, to increase signal strength of the power line communication signal received/sent by the communication circuit 12 and signal strength of the noise signal received by the arc detection circuit 13. In addition, the communication circuit 12 and the arc detection circuit 13 may respectively perform filtering based on the frequency of the power line communication signal and the frequency of the noise signal, to further improve accuracy of transmitting the power line communication signal or the noise signal, and improve sensitivity of the photovoltaic inverter to detect the arc.

According to this application, the communication circuit and the arc detection circuit may be disposed in the photovoltaic inverter in a centralized manner, so that disposing space is reduced while the power supply safety is ensured, the design costs of the photovoltaic inverter are reduced, a structure is simple, the method is simple, and applicability is strong.

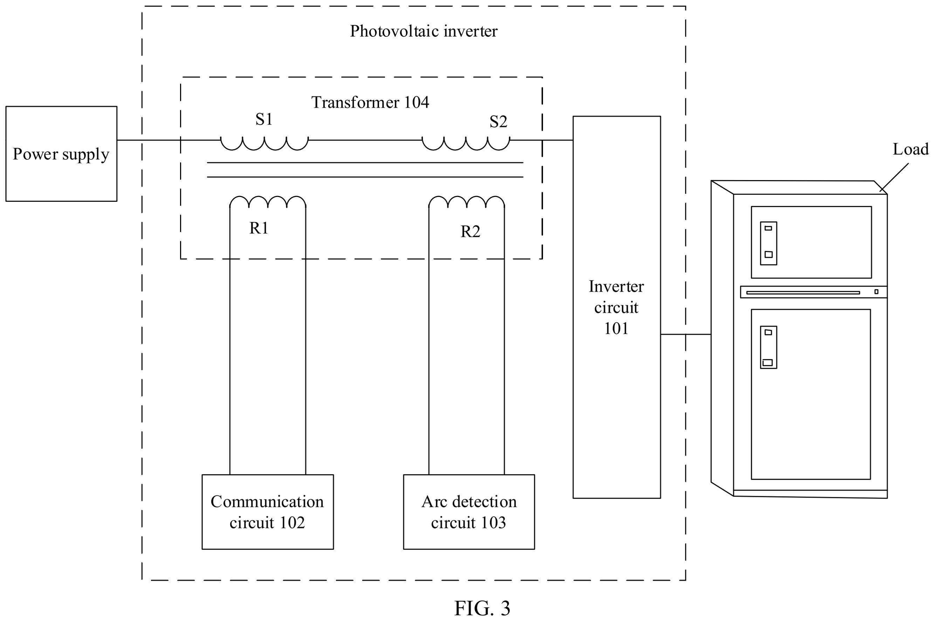

The following uses examples to describe the photovoltaic inverter provided in this application and a working principle of the photovoltaic inverter with reference to FIG. 3 to FIG. 9.

In some feasible implementations, the at least one primary-side coil in the transformer may further include a second primary-side coil, and the magnetic core may include a magnetic conductive material. Refer to FIG. 3. FIG. 3 is a schematic of a structure of a photovoltaic inverter according to an embodiment of this application. As shown in FIG. 3, the photovoltaic inverter includes an inverter circuit 101, a communication circuit 102, an arc detection circuit 103, and a transformer 104. One end of the second primary-side coil S2 may be configured to connect to the power supply. The other end of the second primary-side coil S2 may be configured to connect to the input end of the inverter circuit. The first primary-side coil S1 is coupled to the first secondary-side coil R1. The second primary-side coil S2 is coupled to the second secondary-side coil R2. The first primary-side coil S1 and the first secondary-side coil R1 and the second primary-side coil S2 and the second secondary-side coil R2 are respectively disposed at two sides of the magnetic core that are separated by the magnetic conductive material. Herein, the arc detection circuit 103 may further implement arc detection between the power supply and the inverter circuit 101 based on the noise signal that is between the power supply and the inverter circuit 101 and that is received by the second secondary-side coil R2 and the second primary-side coil S2.

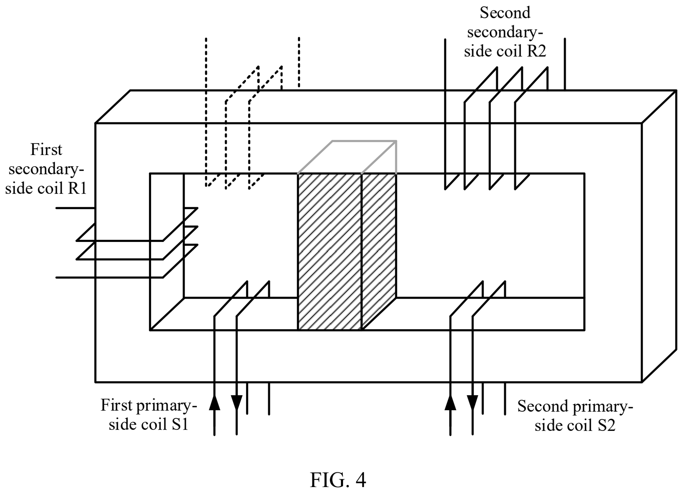

Herein, the primary-side coils (for example, the first primary-side coil S1 and the second primary-side coil S2) of the transformer 104 may be connected between the inverter circuit 101 and the power supply, one secondary-side coil (for example, the first secondary-side coil R1) may connect to the communication circuit 102, and the other secondary-side coil (for example, the second secondary-side coil R2) may connect to the arc detection circuit 103. For specific details, refer to FIG. 4. FIG. 4 is a diagram of another structure of a transformer according to an embodiment of this application. As shown in FIG. 4, a first primary-side coil S1 may be coupled to a first secondary-side coil R1 (the first secondary-side coil R1 may alternatively be located at a dashed line location opposite to the first primary-side coil S1), and a second primary-side coil S2 may be coupled to a second secondary-side coil R2 (the second secondary-side coil R2 may alternatively be located at a side location adjacent to the second primary-side coil S2). Because both the primary-side coils (for example, the first primary-side coil S1 and the second primary-side coil S2) and the secondary-side coils (for example, the first secondary-side coil R1 and the second secondary-side coil R2) of the transformer 104 are wound around a magnetic core, a communication circuit 102 and an arc detection circuit 103 may transmit signals (for example, a power line communication signal and a noise signal) through the coupled primary-side coils in the transformer 104 and the respective secondary-side coils of the transformer 104 that are connected to the communication circuit 102 and the arc detection circuit 103. Herein, a frequency of the power line communication signal is not equal to a frequency of the noise signal, so that mutual interference between the two signals can be avoided. It may be further understood that the communication circuit 102 and the arc detection circuit 103 may respectively change parameters of the respective secondary-side coils connected to the communication circuit 102 and the arc detection circuit 103 (for example, change parameters such as quantities of turns, coil areas, or winding diameters of the first secondary-side coil R1 and the second secondary-side coil R2), so that two groups of coupled coils (for example, the first primary-side coil S1 and the first secondary-side coil R1, and the second primary-side coil S2 and the second secondary-side coil R2) respectively generate resonances at different frequencies, to increase signal strength of the power line communication signal received/sent by the communication circuit 102 and signal strength of the noise signal received by the arc detection circuit 103. In addition, the communication circuit 102 and the arc detection circuit 103 may respectively perform filtering based on the frequency of the power line communication signal and the frequency of the noise signal, to further improve accuracy of transmitting the power line communication signal or the noise signal. Herein, both the first primary-side coil S1 and the second primary-side coil S2 may include coils that are wound in opposite directions, to suppress the common-mode component in the noise signal. Herein, parameters of the coils wound in opposite directions (for example, quantities of turns, coil areas, and winding diameters) may be consistent or may be different, provided that when the noise signal (or the arc self-detection signal) passes through, magnetic fluxes generated by the common-mode component of the noise signal (or the arc self-detection signal) in the positive and negative coils are equal, so that arc detection precision of the system can be further improved. The method is flexible, easy to operate, and has good adaptability. In addition, a magnetic conductive material (shown in a shadow part in FIG. 4) may be further included in the middle of the magnetic core of the transformer 104. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil S1 and the first secondary-side coil R1, and the second primary-side coil S2 and the second secondary-side coil R2) in the transformer 104 may be disposed at two sides of the magnetic core that are separated by the magnetic conductive material. Herein, the magnetic conductive material may be another material with a high magnetic permeability, such as a ferrite, a non-crystal, a nano-crystal, or a powder core, and has a simple structure and good adaptability.

In this application, the secondary-side coils connected to the communication circuit 102 and the arc detection circuit 103 may be respectively coupled to the two primary-side coils in the transformer 104. This improves system integration and improves system design freedom. For example, parameters of the primary-side coil and the secondary-side coil in each group of coupled coils may be separately changed, so that a resonance frequency of the coil may be more variable, to adapt to frequencies of power line communication signals and noise signals in more application scenarios. In addition, the groups of coupled coils may be separately routed and arranged in the photovoltaic inverter, so that the photovoltaic inverter has higher integration, more design flexibility and freedom, and better adaptability.

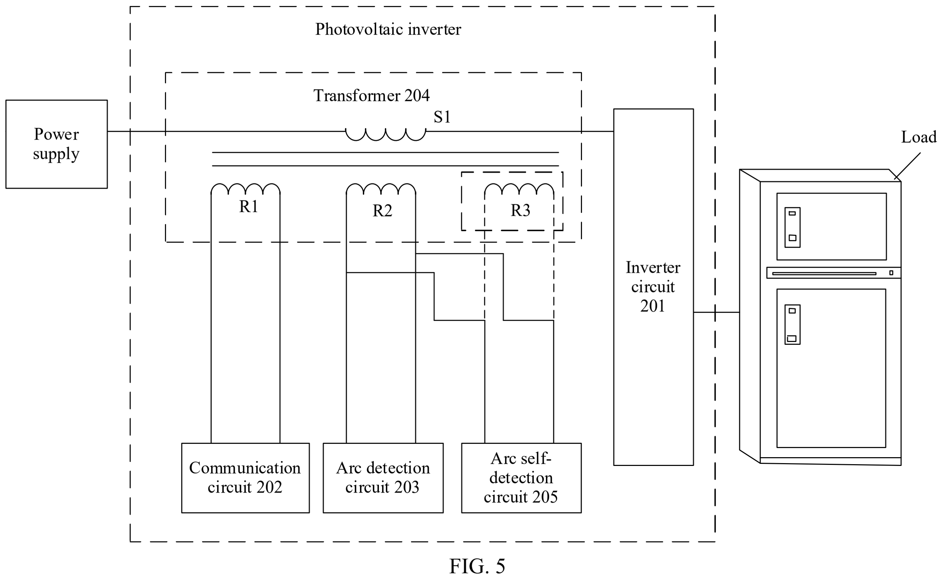

In some feasible implementations, the photovoltaic inverter may further include an arc self-detection circuit. For specific details, refer to FIG. 5. FIG. 5 is a schematic of another structure of a photovoltaic inverter according to an embodiment of this application. As shown in FIG. 5, the photovoltaic inverter includes an inverter circuit 201, a communication circuit 202, an arc detection circuit 203, a transformer 204, and a self-detection circuit 205. Herein, a second secondary-side coil R2 may be configured to connect to the arc self-detection circuit 205 and the arc detection circuit 203. Herein, the arc self-detection circuit 205 may send an arc self-detection signal based on the second secondary-side coil R2 and a first primary-side coil S1, to simulate, based on the arc self-detection signal, a noise signal when an arc exists between the power supply and the inverter circuit 201, where a frequency of the arc self-detection signal is not equal to a frequency of a power line communication signal between the power supply and the inverter circuit 201. Herein, the arc detection circuit 203 may further receive the arc self-detection signal based on the second secondary-side coil R2, and simulate arc detection between the power supply and the inverter circuit 201. Herein, the arc self-detection circuit 205 may generate the arc self-detection signal, to simulate the noise signal generated when the arc exists at a power supply end, to test a detection capability of the arc detection circuit 203 in the photovoltaic inverter. Refer to FIG. 2 and FIG. 4, the arc self-detection circuit 205 may be connected to the secondary-side coil (for example, the second secondary-side coil R2) of the transformer 204, and the arc self-detection signal generated by the arc self-detection circuit 205 may be transmitted, through the second secondary-side coil R2, to a primary-side coil (for example, the first primary-side coil S1 or the second primary-side coil S2) coupled to the second secondary-side coil R2. Then, the arc detection circuit 203 is coupled to the primary-side coil (for example, the first primary-side coil S1 or the second primary-side coil S2) by using the secondary-side coil (for example, the second secondary-side coil R2) connected to the arc detection circuit 203, and receives the arc self-detection signal transmitted by the primary-side coil (for example, the first primary-side coil S1 or the second primary-side coil S2). Herein, the frequency of the power line communication signal is not equal to the frequency of the arc self-detection signal, so that mutual interference between the two signals can be avoided. It may be further understood that the communication circuit 202 and the arc self-detection circuit 205 may respectively change parameters of the respective secondary-side coils connected to the communication circuit 202 and the arc self-detection circuit 205 (for example, change parameters such as quantities of turns, coil areas, or winding diameters of the first secondary-side coil R1 and the second secondary-side coil R2), so that the two groups of coupled coils (for example, the first primary-side coil S1 and the first secondary-side coil R1, and the second primary-side coil S2 and the second secondary-side coil R2) respectively generate resonances at different frequencies, to increase the signal strength of the power line communication signal received/sent by the communication circuit 202 and signal strength of the arc self-detection signal sent by the arc self-detection circuit 205 and received by the arc detection circuit 203. In addition, the communication circuit 202 and the arc detection circuit 203 may respectively perform filtering based on the frequency of the power line communication signal and the frequency of the arc self-detection signal, to further improve the accuracy of transmitting the power line communication signal or the arc self-detection signal, and improve the sensitivity of the photovoltaic inverter to detect the arc.

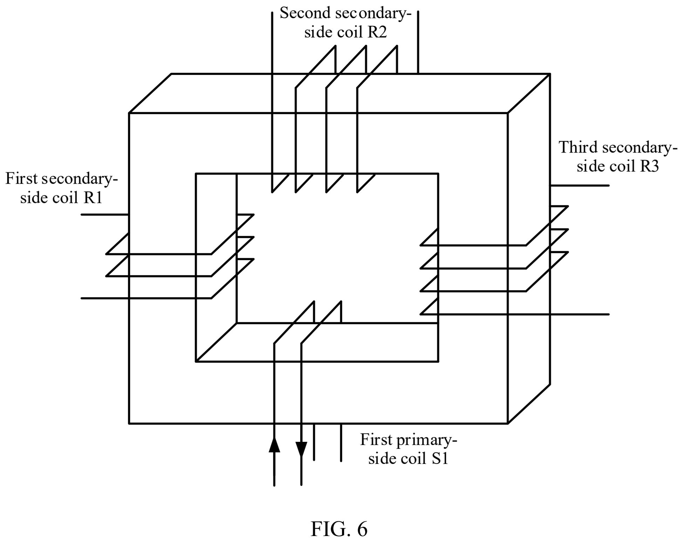

In some feasible implementations, as shown in FIG. 5, when the photovoltaic inverter may include the arc self-detection circuit 205, at least two secondary-side coils in the transformer 204 may further include a third secondary-side coil (as shown by a dashed line in FIG. 5). For specific details, refer to FIG. 6. FIG. 6 is a diagram of another structure of a transformer according to an embodiment of this application. As shown in FIG. 6, a third secondary-side coil R3 and a first primary-side coil S1 are wound around a magnetic core, the third secondary-side coil R3 is coupled to the first primary-side coil S1, and the third secondary-side coil R3 may be connected to an arc self-detection circuit 205. Herein, the arc self-detection circuit 205 may send an arc self-detection signal based on the third secondary-side coil R3 and the first primary-side coil S1, to simulate, based on the arc self-detection signal, a noise signal when an arc exists between a power supply and an inverter circuit 201.

Herein, the first primary-side coil S1 of the transformer 204 may be connected between the inverter circuit 201 and the power supply, one secondary-side coil (for example, a first secondary-side coil R1) may be connected to a communication circuit 202, a 2^{nd} secondary-side coil (for example, a second secondary-side coil R2) may be connected to an arc detection circuit 203, and a 3^{rd} secondary-side coil (for example, the third secondary-side coil R3) may be connected to the arc self-detection circuit 205. In addition, the first primary-side coil S1 may be coupled to the first secondary-side coil R1, the second secondary-side coil R2, and the third secondary-side coil R3. Because both the primary-side coil (for example, the first primary-side coil S1) and the secondary-side coils (for example, the first secondary-side coil R1, the second secondary-side coil R2, and the third secondary-side coil R3) of the transformer 204 are wound around the magnetic core, the communication circuit 202, the arc detection circuit 203, and the arc self-detection circuit 205 may transmit signals (for example, a power line communication signal, the noise signal, and the arc self-detection signal) through the coupled primary-side coil in the transformer 204 and the respective secondary-side coils of the transformer 204 that are connected to the communication circuit 202, the arc detection circuit 203, and the arc self-detection circuit 205. Herein, a frequency of the power line communication signal is not equal to a frequency of the noise signal, and the frequency of the power line communication signal is not equal to a frequency of the arc self-detection signal, so that mutual interference can be avoided when two signals are simultaneously transmitted in the photovoltaic inverter. It may be further understood that the communication circuit 202, the arc detection circuit 203, and the arc self-detection circuit 205 may respectively change parameters of the respective secondary-side coils connected to the communication circuit 202, the arc detection circuit 203, and the arc self-detection circuit 205 (for example, change parameters such as quantities of turns, coil areas, or winding diameters of the first secondary-side coil R1, the second secondary-side coil R2, and the third secondary-side coil R3), so that groups of coupled coils (for example, the first primary-side coil S1 and the first secondary-side coil R1, the first primary-side coil S1 and the second secondary-side coil R2, and the first primary-side coil S1 and the third secondary-side coil R3) generate resonances at different frequencies, to increase signal strength of the power line communication signal received/sent by the communication circuit 202, signal strength of the noise signal received by the arc detection circuit 203, or signal strength of the arc self-detection signal received by the arc detection circuit 203. In addition, the communication circuit 202 and the arc detection circuit 203 may respectively perform filtering based on the frequency of the power line communication signal, the frequency of the noise signal, or the frequency of the arc self-detection signal, to further improve accuracy of transmitting the power line communication signal, the noise signal, or the arc self-detection signal, and improve sensitivity of the photovoltaic inverter to detect the arc.

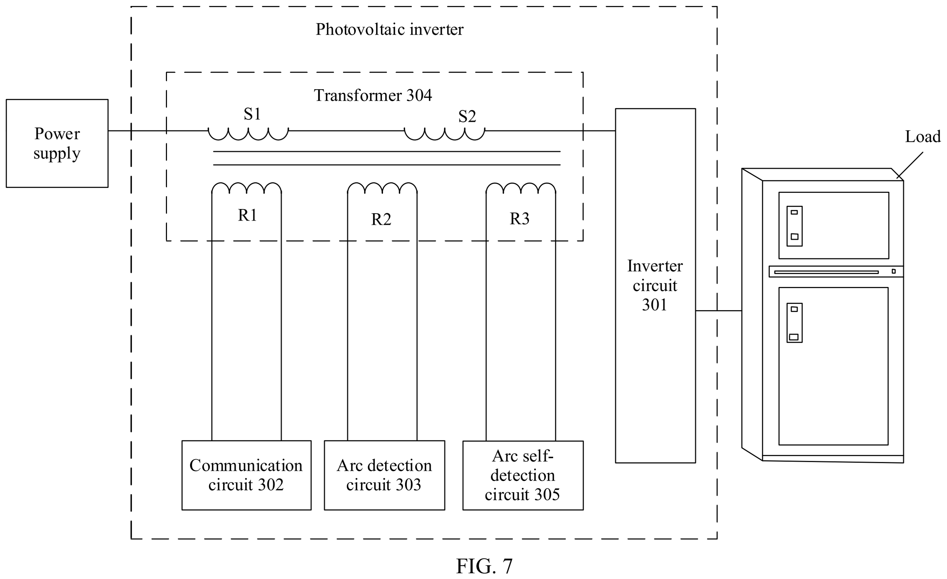

In some feasible implementations, when the primary-side coil of the transformer further includes the second primary-side coil, and the photovoltaic inverter includes the arc self-detection circuit, for specific details, refer to FIG. 7. FIG. 7 is a schematic of another structure of a photovoltaic inverter according to an embodiment of this application. As shown in FIG. 7, the photovoltaic inverter includes an inverter circuit 301, a communication circuit 302, an arc detection circuit 303, a transformer 304, and an arc self-detection circuit 305. At least two secondary-side coils in the transformer 304 may further include a third secondary-side coil R3. The third secondary-side coil R3 and at least one primary-side coil are wound around a magnetic core, and the third secondary-side coil R3 is coupled to a first primary-side coil S1, or the third secondary-side coil R3 is coupled to a second primary-side coil S2. The arc self-detection circuit 305 is connected to the third secondary-side coil R3. Herein, the arc self-detection circuit 305 may send an arc self-detection signal based on the third secondary-side coil R3 and the second primary-side coil S2, to simulate, based on the arc self-detection signal, a noise signal when an arc exists between a power supply and an inverter circuit 301.

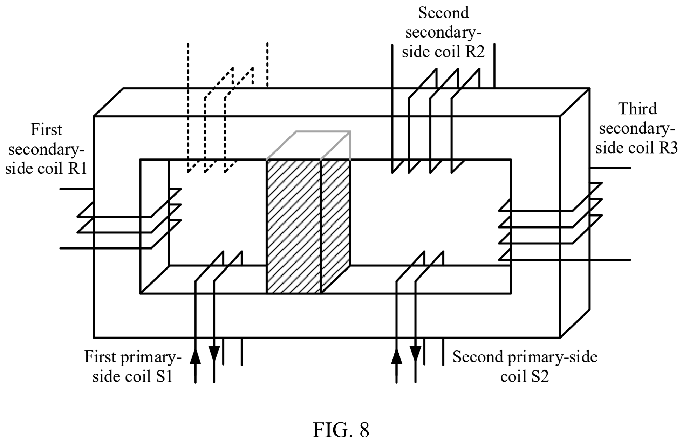

Herein, the primary-side coil (for example, the first primary-side coil S1 or the second primary-side coil S2) of the transformer 304 may be connected between the inverter circuit 301 and the power supply, one secondary-side coil (for example, the first secondary-side coil R1) may connect to the communication circuit 302, a 2^{nd} secondary-side coil (for example, the second secondary-side coil R2) may connect to the arc detection circuit 303, and a 3^{rd} secondary-side coil (for example, the third secondary-side coil R3) may connect to the arc self-detection circuit 305. For specific details, refer to FIG. 8. FIG. 8 is a diagram of another structure of a transformer according to an embodiment of this application. As shown in FIG. 8, a first primary-side coil S1 may be coupled to a first secondary-side coil R1, and a second primary-side coil S2 may be coupled to a second secondary-side coil R2 and a third secondary-side coil R3. Because both the primary-side coils (for example, the first primary-side coil S1 and the second primary-side coil S2) and the secondary-side coils (for example, the first secondary-side coil R1, the second secondary-side coil R2, and the third secondary-side coil R3) of the transformer 304 are wound around a magnetic core, a communication circuit 302, an arc detection circuit 303, and an arc self-detection circuit 305 may transmit signals (for example, a power line communication signal, a noise signal, and an arc self-detection signal) through the coupled primary-side coils in the transformer 304 and the respective secondary-side coils of the transformer 304 that are connected to the communication circuit 302, the arc detection circuit 303, and the arc self-detection circuit 305. Herein, a frequency of the power line communication signal is not equal to a frequency of the noise signal, and the frequency of the power line communication signal is not equal to a frequency of the arc self-detection signal, so that mutual interference can be avoided when two signals are simultaneously transmitted in the photovoltaic inverter. It may be further understood that the communication circuit 302, the arc detection circuit 303, and the arc self-detection circuit 305 may respectively change parameters of the respective secondary-side coils (and the primary-side coils coupled to the secondary-side coils) connected to the communication circuit 302, the arc detection circuit 303, and the arc self-detection circuit 305 (for example, change parameters such as quantities of turns, coil areas, or winding diameters of the first secondary-side coil R1, the second secondary-side coil R2, and the third secondary-side coil R3), so that groups of coupled coils (for example, the first primary-side coil S1 and the first secondary-side coil R1, and the second primary-side coil S2, the second secondary-side coil R2, and the third secondary-side coil R3) respectively generate resonances at different frequencies, to increase signal strength of the power line communication signal received/sent by the communication circuit 302, signal strength of the noise signal received by the arc detection circuit 303, or signal strength of the arc self-detection signal received by the arc detection circuit 303. In addition, the communication circuit 302 and the arc detection circuit 303 may respectively perform filtering based on the frequency of the power line communication signal, the frequency of the noise signal, or the frequency of the arc self-detection signal, to further improve accuracy of transmitting the power line communication signal, the noise signal, or the arc self-detection signal, and improve sensitivity of the photovoltaic inverter to detect an arc.

In addition, a magnetic conductive material may be further included in the middle of the magnetic core of the transformer 304. The magnetic conductive material may divide the magnetic core into two sides, to shield signals transmitted at the two sides of the magnetic conductive material in the magnetic core, to prevent mutual interference between the signals at the two sides of the magnetic conductive material. In other words, two groups of coils (for example, the first primary-side coil S1 and the first secondary-side coil R1, and the second primary-side coil S2, the second secondary-side coil R2, and the third secondary-side coil R3) in the transformer 304 may be disposed at two sides of the magnetic core that are separated by the magnetic conductive material. Herein, the magnetic conductive material may be another material with a high magnetic permeability, such as a ferrite, a non-crystal, a nano-crystal, or a powder core, and has a simple structure and good adaptability.

In this application, functional modules in the photovoltaic inverter are formed in various and flexible manners, and are applicable to different application scenarios, thereby improving diversity of application scenarios of the photovoltaic inverter and enhancing adaptability of the photovoltaic inverter. In addition, in any one of the photovoltaic inverters shown in FIG. 1 to FIG. 8, the communication circuit and the arc detection circuit may be disposed in the inverter in a centralized manner, so that disposing space is reduced while power supply safety is ensured, design costs of the photovoltaic inverter are reduced, a structure is simple, a method is simple, and applicability is strong. For ease of description, the following uses the structure of the photovoltaic inverter shown in FIG. 1 as an example to describe a drive control method provided in an embodiment of this application.

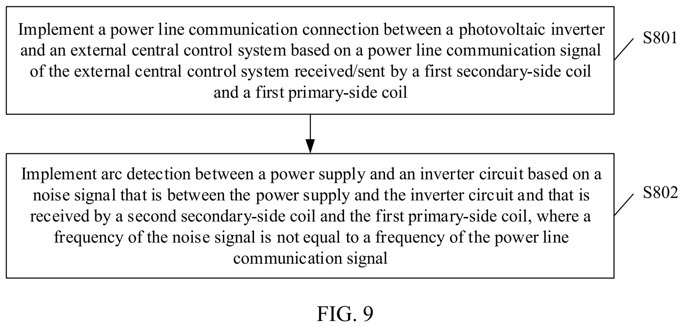

Refer to FIG. 9. FIG. 9 is a schematic flowchart of a control method according to this application. The control method provided in this application is applicable to a photovoltaic inverter, including but not limited to any one of the photovoltaic inverters shown in FIG. 1 to FIG. 8. As shown in FIG. 9, the control method provided in this application includes the following steps.

S801: Implement a power line communication connection between the photovoltaic inverter and an external central control system based on a power line communication signal of the external central control system received/sent by a first secondary-side coil and a first primary-side coil.

S802: Implement arc detection between a power supply and an inverter circuit based on a noise signal that is between the power supply and the inverter circuit and that is received by a second secondary-side coil and the first primary-side coil, where a frequency of the noise signal is not equal to a frequency of the power line communication signal.

In this application, a photovoltaic panel may be used as the power supply and connected to a load by using the photovoltaic inverter. The photovoltaic inverter may convert direct current electric energy provided by the photovoltaic panel into alternating current energy, and the alternating current energy is provided for the load. Herein, the photovoltaic inverter may include the inverter circuit, and the inverter circuit may convert the direct current electric energy into the alternating current energy, so that electric energy output by the photovoltaic inverter can adapt to the alternating current load. In a photovoltaic power supply scenario, to ensure photovoltaic power supply efficiency, the photovoltaic inverter may supply power by using an MPPT technology, that is, control an output current (that is, an input current of the photovoltaic inverter) of the PV panel based on operating statuses of the PV panel and the load (for example, based on parameters such as a light condition and an output voltage of the PV panel, and parameters such as an impedance or power of the load), so that a PV battery operates at a maximum power point. Herein, the photovoltaic inverter may include a communication circuit, and establish a power line communication connection with the PV panel by using the communication circuit, to control an operating current (or voltage) of the photovoltaic inverter or the PV panel based on operating statuses of the PV panel and the load (for example, the impedance of the load and an energy yield of the PV panel), so that the PV panel outputs electric energy to the load at maximum power. In addition, during actual application, a power supply end usually includes a plurality of PV panels. As a result, a voltage of a direct current end of the photovoltaic inverter (that is, an end of the photovoltaic inverter that connects to the power supply) is usually high. When there is any aged cable connection, faulty connector, unmatched model, or loose connection at the direct current end, or two conductors with opposite polarities are close to each other, and insulation between two wires fails, an arc may be generated under a function of a high voltage, and endanger power supply safety. Herein, the photovoltaic inverter may further include an arc detection circuit, and perform arc detection based on a noise signal between the photovoltaic inverter and the power supply. When it is detected that the arc is generated in a system, an electrical connection between the photovoltaic inverter and the power supply is disconnected in time, to ensure the power supply safety.

It may be understood that, on the basis that a communication connection is established between the photovoltaic inverter and the power supply, and the power supply safety of the system is ensured, to reduce designed space of the photovoltaic inverter, improve integration of circuits in the photovoltaic inverter, and reduce design costs, the photovoltaic inverter may connect the communication circuit and the arc detection circuit together by using a transformer, so that the communication circuit and the arc detection circuit reuse a magnetic core in the transformer. The transformer may include one magnetic core, at least one primary-side coil, and at least two secondary-side coils. Herein, the primary-side coil (for example, the first primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. Because both the primary-side coil (for example, the first primary-side coil) and the secondary-side coils (for example, the first secondary-side coil and the second secondary-side coil) of the transformer are wound around the magnetic core, the communication circuit and the arc detection circuit may transmit signals (for example, the power line communication signal and the noise signal) through the primary-side coil in the transformer and the respective secondary-side coils of the transformer that are connected to the communication circuit and the arc detection circuit. Herein, a frequency of the power line communication signal is not equal to a frequency of the noise signal, so that mutual interference between the two signals can be avoided. It may be further understood that the communication circuit and the arc detection circuit may respectively change parameters of the respective secondary-side coils connected to the communication circuit and the arc detection circuit (for example, change parameters such as quantities of turns, coil areas, or winding diameters of the first secondary-side coil and the second secondary-side coil), so that the primary-side coil (for example, the first primary-side coil) and the respective secondary-side coils connected to the communication circuit and the arc detection circuit generate resonances at different frequencies, to increase signal strength of the power line communication signal received/sent by the communication circuit and signal strength of the noise signal received by the arc detection circuit. In addition, the communication circuit and the arc detection circuit may respectively perform filtering based on the frequency of the power line communication signal and the frequency of the noise signal, to further improve accuracy of transmitting the power line communication signal or the noise signal, and improve sensitivity of the photovoltaic inverter to detect the arc.

According to this application, the communication circuit and the arc detection circuit may be disposed in the photovoltaic inverter in a centralized manner, so that disposing space is reduced while the power supply safety is ensured, the design costs of the photovoltaic inverter are reduced, a structure is simple, the method is simple, and applicability is strong.

In some feasible implementations, the at least one primary-side coil in the transformer may further include a second primary-side coil, and the magnetic core may include a magnetic conductive material. The method may further include: implementing arc detection between the power supply and the inverter circuit based on the noise signal that is between the power supply and the inverter circuit and that is received by the second secondary-side coil and the second primary-side coil.

Herein, the primary-side coils (for example, the first primary-side coil and the second primary-side coil) of the transformer may be connected between the inverter circuit and the power supply, one secondary-side coil (for example, the first secondary-side coil) may connect to the communication circuit, and the other secondary-side coil (for example, the second secondary-side coil) may connect to the arc detection circuit. In addition, the first primary-side coil may be coupled to the first secondary-side coil, and the second primary-side coil may be coupled to the second secondary-side coil. Because both the primary-side coils (for example, the first primary-side coil and the second primary-side coil) and the secondary-side coils (for example, the first secondary-side coil and the second secondary-side coil) of the transformer are wound around the magnetic core, the communication circuit and the arc detection circuit may transmit signals (for example, the power line communication signal and the noise signal) through the coupled primary-side coils in the transformer and the respective secondary-side coils of the transformer that are connected to the communication circuit and the arc detection circuit. Herein, the frequency of the power line communication signal is not equal to the frequency of the noise signal, so that mutual interference between the two signals can be avoided. It may be further understood that the communication circuit and the arc detection circuit may respectively change the parameters of the respective secondary-side coils connected to the communication circuit and the arc detection circuit (for example, change the parameters such as the quantities of turns, the coil areas, or the winding diameters of the first secondary-side coil and the second secondary-side coil), so that two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and the signal strength of the noise signal received by the arc detection circuit. In addition, the communication circuit and the arc detection circuit may respectively perform filtering based on the frequency of the power line communication signal and the frequency of the noise signal, to further improve the accuracy of transmitting the power line communication signal or the noise signal. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, the two groups of coils (for example, the first primary-side coil and the first secondary-side coil, and the second primary-side coil and the second secondary-side coil) in the transformer may be disposed at two sides of the magnetic core that are separated by the magnetic conductive material. Herein, the magnetic conductive material may be another material with a high magnetic permeability, such as a ferrite, a non-crystal, a nano-crystal, or a powder core, and has a simple structure and good adaptability.

In this application, the secondary-side coils connected to the communication circuit and the arc detection circuit may be respectively coupled to the two primary-side coils in the transformer. This improves system integration and improves system design freedom. For example, parameters of the primary-side coil and the secondary-side coil in each group of coupled coils may be separately changed, so that a resonance frequency of the coil may be more variable, to adapt to frequencies of power line communication signals and noise signals in more application scenarios. In addition, the groups of coupled coils may be separately routed and arranged in the photovoltaic inverter, so that the photovoltaic inverter has higher integration, more design flexibility and freedom, and better adaptability.

In some feasible implementations, the photovoltaic inverter may further include an arc self-detection circuit, and the method may further include:
sending an arc self-detection signal based on the second secondary-side coil and the first primary-side coil, to simulate, based on the arc self-detection signal, a noise signal when an arc exists between the power supply and the inverter circuit, where a frequency of the arc self-detection signal is not equal to the frequency of the power line communication signal; and receiving the arc self-detection signal based on the second secondary-side coil, and simulating arc detection between the power supply and the inverter circuit.

Herein, the photovoltaic inverter may further include the arc self-detection circuit. The arc self-detection circuit may generate the arc self-detection signal, to simulate the noise signal generated when the arc exists at the power supply end, to test a detection capability of the arc detection circuit in the photovoltaic inverter. Herein, the arc self-detection circuit may be connected to the secondary-side coil (for example, the second secondary-side coil) of the transformer, and the arc self-detection signal generated by the arc self-detection circuit may be transmitted, through the second secondary-side coil, to a primary-side coil (for example, the first primary-side coil or the second primary-side coil) coupled to the second secondary-side coil. Then, the arc detection circuit is coupled to the primary-side coil (for example, the first primary-side coil or the second primary-side coil) by using the secondary-side coil (for example, the second secondary-side coil) connected to the arc detection circuit, and receives the arc self-detection signal transmitted by the primary-side coil (for example, the first primary-side coil or the second primary-side coil). Herein, the frequency of the power line communication signal is not equal to the frequency of the arc self-detection signal, so that mutual interference between the two signals can be avoided. It may be further understood that the communication circuit and the arc self-detection circuit may respectively change parameters of the respective secondary-side coils connected to the communication circuit and the arc self-detection circuit (for example, change parameters such as quantities of turns, coil areas, or winding diameters of the first secondary-side coil and the second secondary-side coil), so that the two groups of coupled coils (for example, the first primary-side coil and the first secondary-side coil, and the second primary-side coil and the second secondary-side coil) respectively generate resonances at different frequencies, to increase the signal strength of the power line communication signal received/sent by the communication circuit and signal strength of the arc self-detection signal sent by the arc self-detection circuit and received by the arc detection circuit. In addition, the communication circuit and the arc detection circuit may respectively perform filtering based on the frequency of the power line communication signal and the frequency of the arc self-detection signal, to further improve accuracy of transmitting the power line communication signal or the arc self-detection signal, and improve the sensitivity of the photovoltaic inverter to detect the arc.

In some feasible implementations, when the photovoltaic inverter may include the arc self-detection circuit, the at least two secondary-side coils in the transformer may further include a third secondary-side coil, and before the receiving the arc self-detection signal based on the second secondary-side coil, the method may further include:
sending the arc self-detection signal based on the third secondary-side coil and the first primary-side coil, to simulate, based on the arc self-detection signal, the noise signal when an arc exists between the power supply and the inverter circuit.

Herein, the primary-side coil (for example, the first primary-side coil or the second primary-side coil) of the transformer may be connected between the inverter circuit and the power supply, one secondary-side coil (for example, the first secondary-side coil) may connect to the communication circuit, a 2^{nd} secondary-side coil (for example, the second secondary-side coil) may connect to the arc detection circuit, and a 3^{rd} secondary-side coil (for example, the third secondary-side coil) may connect to the arc self-detection circuit. In addition, the first primary-side coil may be coupled to the first secondary-side coil, and the second primary-side coil may be coupled to the second secondary-side coil and the third secondary-side coil. When the inverter includes only one primary-side coil, the first primary-side coil may be coupled to the first secondary-side coil, the second secondary-side coil, and the third secondary-side coil. Because both the primary-side coils (for example, the first primary-side coil and the second primary-side coil) and the secondary-side coils (for example, the first secondary-side coil, the second secondary-side coil, and the third secondary-side coil) of the transformer are wound around the magnetic core, the communication circuit, the arc detection circuit, and the arc self-detection circuit may transmit signals (for example, the power line communication signal, the noise signal, and the arc self-detection signal) through the coupled primary-side coils in the transformer and the respective secondary-side coils of the transformer that are connected to the communication circuit, the arc detection circuit, and the arc self-detection circuit. Herein, the frequency of the power line communication signal is not equal to the frequency of the noise signal, and the frequency of the power line communication signal is not equal to the frequency of the arc self-detection signal, so that mutual interference can be avoided when two signals are simultaneously transmitted in the photovoltaic inverter. It may be further understood that the communication circuit, the arc detection circuit, and the arc self-detection circuit may respectively change parameters of the respective secondary-side coils (and the primary-side coils coupled to the secondary-side coils) connected to the communication circuit, the arc detection circuit, and the arc self-detection circuit (for example, change the parameters such as quantities of turns, coil areas, or winding diameters of the first secondary-side coil, the second secondary-side coil, and the third secondary-side coil), so that the groups of coupled coils (for example, the first primary-side coil and the first secondary-side coil, and the second primary-side coil, the second secondary-side coil, and the third secondary-side coil; or the first primary-side coil, the first secondary-side coil, the second secondary-side coil, and the third secondary-side coil) respectively generate resonances at different frequencies, to increase the signal strength of the power line communication signal received/sent by the communication circuit, the signal strength of the noise signal received by the arc detection circuit, or the signal strength of the arc self-detection signal received by the arc detection circuit. In addition, the communication circuit and the arc detection circuit may respectively perform filtering based on the frequency of the power line communication signal, the frequency of the noise signal, or the frequency of the arc self-detection signal, to further improve the accuracy of transmitting the power line communication signal, the noise signal, or the arc self-detection signal, and improve the sensitivity of the photovoltaic inverter to detect the arc. In addition, the magnetic conductive material may be further included in the middle of the magnetic core of the transformer. The magnetic conductive material may divide the magnetic core into two sides, to shield signals transmitted at the two sides of the magnetic conductive material in the magnetic core, to prevent mutual interference between the signals at the two sides of the magnetic conductive material. In other words, the two groups of coils (for example, the first primary-side coil and the first secondary-side coil, and the second primary-side coil, the second secondary-side coil, and the third secondary-side coil) in the transformer may be disposed at two sides of the magnetic core that are separated by the magnetic conductive material. Herein, the magnetic conductive material may be another material with a high magnetic permeability, such as the ferrite, the non-crystal, the nano-crystal, or the powder core, and has the simple structure and the good adaptability.

In some feasible implementations, the implementing arc detection between a power supply and an inverter circuit based on a noise signal that is between the power supply and the inverter circuit and that is received by a second secondary-side coil and the first primary-side coil may include:
when an amplitude of the noise signal is greater than or equal to a first noise threshold, detecting that an arc exists between the power supply and the inverter circuit; and when the amplitude of the noise signal is less than a second noise threshold, detecting that no arc exists between the power supply and the inverter circuit, where the second noise threshold is less than or equal to the first noise threshold.

It may be understood that a value of the first noise threshold (and/or the second noise threshold) herein may be determined based on an amplitude of the noise signal when the arc occurs in the system, or may be determined based on a first noise threshold (and/or a second noise threshold) obtained, collected, received, detected, stored, or otherwise obtained by the photovoltaic inverter. For example, the photovoltaic inverter or an external central control system may calculate, in an operating process (or a design process) of the photovoltaic inverter, an amplitude of a noise signal generated when a photovoltaic system operates normally (no arc is generated) within a noise signal amplitude range, so that the arc detection circuit may obtain the first noise threshold (and/or the second noise threshold) based on a relationship curve. This may be specifically set based on an application scenario. It may be understood that the first noise threshold (and/or the second noise threshold) herein may be a voltage value (a current value, or a power value), may be a plurality of discrete voltage values (current values, or power values), or may be a voltage range (a current range, or a power range) including a plurality of discrete voltage values (current values, or power values) or consecutive voltage values (current values, or power values). In addition, the second noise threshold herein may be less than or equal to the first noise threshold. When the second noise threshold is less than the first noise threshold, the arc detection circuit may be prevented from mistakenly determining, after determining that an arc is generated, that the arc in the system has disappeared (or no arc exists) when the amplitude of the noise signal is occasionally less than the first noise threshold but is not stably less than the first noise threshold. In this way, the arc detection circuit can avoid frequently disconnecting and connecting the connection between the photovoltaic inverter and the power supply, or avoid that the connection between the photovoltaic inverter and the power supply fails to be disconnected in time due to mistaken determining when the arc is generated, thereby further improving the power supply safety of the system.

In some feasible implementations, the implementing arc detection between a power supply and an inverter circuit based on a noise signal that is between the power supply and the inverter circuit and that is received by a second secondary-side coil and the first primary-side coil may further include:
performing sampling on the noise signal at least once, and obtaining the amplitude of the noise signal based on a result of the sampling on the noise signal at least once.

Herein, the arc detection circuit may sample a received noise signal at a same sampling point (or a plurality of different sampling points) within a consecutive period of time (or at a plurality of time points at specific time intervals), and directly (or through averaging or weighted averaging) calculate a result obtained through sampling to obtain an amplitude of the noise signal, or perform calculations such as discrete Fourier transform or wavelet transform on a sampling result to obtain an amplitude of the noise signal, thereby further improving the arc detection precision and accuracy of the system.

In this application, the communication circuit and the arc detection circuit may be disposed in the photovoltaic inverter in a centralized manner, so that disposing space is reduced while the power supply safety is ensured, the design costs of the photovoltaic inverter are reduced, a structure is simple, the method is simple, and applicability is strong.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A photovoltaic inverter, wherein the photovoltaic inverter comprises an inverter circuit, a communication circuit, an arc detection circuit, and a transformer, the transformer comprises one magnetic core, at least one primary-side coil, and at least two secondary-side coils, and the at least one primary-side coil and the at least two secondary-side coils are wound around the magnetic core; and
one end of a first primary-side coil in the at least one primary-side coil of the transformer is configured to connect to a power supply, the other end of the first primary-side coil is configured to connect to an input end of the inverter circuit, a first secondary-side coil in the at least two secondary-side coils of the transformer is configured to connect to the communication circuit, and a second secondary-side coil in the at least two secondary-side coils of the transformer is configured to connect to the arc detection circuit, to implement both power line communication and arc detection on the basis that the transformer comprises the magnetic core.

2. The photovoltaic inverter according to claim 1, wherein the one end of the first primary-side coil is configured to connect to a positive output end of the power supply, and the other end of the first primary-side coil is configured to connect to a positive input end of the inverter circuit.

3. The photovoltaic inverter according to claim 1 or 2, wherein the at least one primary-side coil in the transformer further comprises a second primary-side coil, the magnetic core comprises a magnetic conductive material, one end of the second primary-side coil is configured to connect to the power supply, the other end of the second primary-side coil is configured to connect to the input end of the inverter circuit, the first primary-side coil is coupled to the first secondary-side coil, the second primary-side coil is coupled to the second secondary-side coil, and the first primary-side coil and the first secondary-side coil and the second primary-side coil and the second secondary-side coil are respectively disposed at two sides of the magnetic core that are separated by the magnetic conductive material; and
the arc detection circuit is further configured to implement arc detection between the power supply and the inverter circuit based on a noise signal that is between the power supply and the inverter circuit and that is received by the second secondary-side coil and the second primary-side coil.

4. The photovoltaic inverter according to any one of claims 1 to 3, wherein the photovoltaic inverter further comprises an arc self-detection circuit, and the second secondary-side coil is configured to connect the arc self-detection circuit and the arc detection circuit;
the arc self-detection circuit is configured to send an arc self-detection signal based on the second secondary-side coil and the first primary-side coil, to simulate, based on the arc self-detection signal, a noise signal when an arc exists between the power supply and the inverter circuit, wherein a frequency of the arc self-detection signal is not equal to a frequency of a power line communication signal between the power supply and the inverter circuit; and
the arc detection circuit is further configured to receive the arc self-detection signal based on the second secondary-side coil, and simulate arc detection between the power supply and the inverter circuit.

5. The photovoltaic inverter according to claim 4, wherein when the photovoltaic inverter comprises the arc self-detection circuit, the at least two secondary-side coils in the transformer further comprise a third secondary-side coil, the third secondary-side coil and the at least one primary-side coil are wound around the magnetic core, the third secondary-side coil is coupled to the first primary-side coil, or the third secondary-side coil is coupled to the second primary-side coil, and the third secondary-side coil is configured to connect to the arc self-detection circuit; and
the arc self-detection circuit is configured to send the arc self-detection signal based on the third secondary-side coil and the first primary-side coil, to simulate, based on the arc self-detection signal, the noise signal when an arc exists between the power supply and the inverter circuit.

6. The photovoltaic inverter according to claim 5, wherein both the first primary-side coil and the second primary-side coil have coils wound in opposite directions to suppress a common-mode component in the noise signal.

7. The photovoltaic inverter according to any one of claims 1 to 6, wherein the arc detection circuit is further configured to: when an amplitude of the noise signal is greater than or equal to a first noise threshold, detect that an arc exists between the power supply and the inverter circuit; and
the arc detection circuit is further configured to: when the amplitude of the noise signal is less than a second noise threshold, detect that no arc exists between the power supply and the inverter circuit, wherein the second noise threshold is less than or equal to the first noise threshold.

8. The photovoltaic inverter according to claim 7, wherein the arc detection circuit is further configured to: perform sampling on the noise signal at least once, and obtain the amplitude of the noise signal based on a result of the sampling on the noise signal at least once.

9. A photovoltaic inverter control method, wherein the control method is applicable to a photovoltaic inverter, the photovoltaic inverter comprises an inverter circuit, a communication circuit, an arc detection circuit, and a transformer, the transformer comprises one magnetic core, at least one primary-side coil, and at least two secondary-side coils, and the at least one primary-side coil and the at least two secondary-side coils are wound around the magnetic core; and
one end of a first primary-side coil in the at least one primary-side coil of the transformer is configured to connect to a power supply, the other end of the first primary-side coil is configured to connect to an input end of the inverter circuit, a first secondary-side coil in the at least two secondary-side coils of the transformer is configured to connect to the communication circuit, a second secondary-side coil in the at least two secondary-side coils of the transformer is configured to connect to the arc detection circuit, and the method comprises:
implementing a power line communication connection between the photovoltaic inverter and an external central control system based on a power line communication signal of the external central control system received/sent by the first secondary-side coil and the first primary-side coil; and
implementing arc detection between the power supply and the inverter circuit based on a noise signal that is between the power supply and the inverter circuit and that is received by the second secondary-side coil and the first primary-side coil, wherein a frequency of the noise signal is not equal to a frequency of the power line communication signal.

10. The control method according to claim 9, wherein the at least one primary-side coil in the transformer further comprises a second primary-side coil, the magnetic core comprises a magnetic conductive material, one end of the second primary-side coil is configured to connect to the power supply, the other end of the second primary-side coil is configured to connect to the input end of the inverter circuit, the first primary-side coil is coupled to the first secondary-side coil, the second primary-side coil is coupled to the second secondary-side coil, the first primary-side coil and the first secondary-side coil and the second primary-side coil and the second secondary-side coil are respectively disposed at two sides of the magnetic core that are separated by the magnetic conductive material, and the method further comprises:
implementing arc detection between the power supply and the inverter circuit based on the noise signal that is between the power supply and the inverter circuit and that is received by the second secondary-side coil and the second primary-side coil.

11. The control method according to claim 9 or 10, wherein the photovoltaic inverter further comprises an arc self-detection circuit, the second secondary-side coil is configured to connect the arc self-detection circuit and the arc detection circuit, and the method further comprises:
sending an arc self-detection signal based on the second secondary-side coil and the first primary-side coil, to simulate, based on the arc self-detection signal, a noise signal when an arc exists between the power supply and the inverter circuit, wherein a frequency of the arc self-detection signal is not equal to the frequency of the power line communication signal; and
receiving the arc self-detection signal based on the second secondary-side coil, and simulating arc detection between the power supply and the inverter circuit.

12. The control method according to claim 11, wherein when the photovoltaic inverter comprises the arc self-detection circuit, the at least two secondary-side coils in the transformer further comprise a third secondary-side coil, the third secondary-side coil and the at least one primary-side coil are wound around the magnetic core, the third secondary-side coil is coupled to the first primary-side coil, or the third secondary-side coil is coupled to the second primary-side coil, the third secondary-side coil is configured to connect to the arc self-detection circuit, and before the receiving the arc self-detection signal based on the second secondary-side coil, the method further comprises:
sending the arc self-detection signal based on the third secondary-side coil and the first primary-side coil, to simulate, based on the arc self-detection signal, the noise signal when an arc exists between the power supply and the inverter circuit.

13. The control method according to any one of claims 9 to 12, wherein the implementing arc detection between the power supply and the inverter circuit based on a noise signal that is between the power supply and the inverter circuit and that is received by the second secondary-side coil and the first primary-side coil comprises:
when an amplitude of the noise signal is greater than or equal to a first noise threshold, detecting that an arc exists between the power supply and the inverter circuit; and
when the amplitude of the noise signal is less than a second noise threshold, detecting that no arc exists between the power supply and the inverter circuit, wherein the second noise threshold is less than or equal to the first noise threshold.

14. The control method according to claim 13, wherein the implementing arc detection between the power supply and the inverter circuit based on a noise signal that is between the power supply and the inverter circuit and that is received by the second secondary-side coil and the first primary-side coil further comprises:
performing sampling on the noise signal at least once, and obtaining the amplitude of the noise signal based on a result of the sampling on the noise signal at least once.
